# FASCICULE DE BREVET EUROPEEN

(11) **EP 1 302 731 B1**
(45) Date de publication et mention de la délivrance du brevet: **12.12.2007**
(21) Numéro de dépôt: 02292500.2
(22) Date de dépôt: 10.10.2002
(51) Int. Cl.: F25B 25/00, F25D 17/02, B60H 1/32, F01P 9/06

(54) **Dispositif de régulation thermique pour véhicule automobile**
Vorrichtung zur thermischen Regelung von Personenkraftfahrzeugen
Device for the thermal control of a car

(30) Priorité: 12.10.2001 FR 0113155
(43) Date de publication de la demande: 16.04.2003
(73) Titulaire: Peugeot Citroen Automobiles SA, 92200 Neuilly sur Seine (FR)
(72) Inventeur: Amaral, Manuel, 75015 Paris (FR)
(74) Mandataire: Berger, Helmut

(56) Documents cités:
- DE-A- 2 101 955
- DE-A- 3 447 182
- DE-A- 19 609 048
- DE-A- 19 730 678
- DE-U- 8 713 443
- FR-A- 2 686 655
- FR-A- 2 693 685
- US-A- 5 904 052

## Description

La présente invention concerne un dispositif perfectionné de régulation thermique pour véhicule automobile, notamment de type électrique ou hybride. Selon le preambule de la revendication 1. Un tel dispositif est connu du document DE-U-8713443.

Un véhicule de type hybride combine deux sources d'énergie pour assurer sa propulsion : un moteur électrique et un moteur thermique. Dans un véhicule de type électrique ou hybride, le moteur électrique est alimenté par une batterie et commandé par un dispositif d'électronique de puissance.

Le bon fonctionnement de la batterie dépend de la température de l'air environnant cette batterie, notamment de la température ambiante à l'extérieur du véhicule. Généralement la batterie est désactivée lorsque sa température dépasse une valeur maximale d'environ 55 °C. Toutefois, la durée de vie de la batterie pourrait être augmentée en limitant davantage sa température maximale.

Il est connu de refroidir la batterie à l'aide de moyens de mise en circulation d'un flux d'air au contact de cette batterie. Habituellement, l'air de refroidissement de la batterie provient de l'habitacle du véhicule. Les moyens de climatisation de l'habitacle participent donc au refroidissement de la batterie.

Ainsi, on connaît déjà dans l'état de la technique un dispositif de régulation thermique pour véhicule automobile, du type comprenant une pompe à chaleur comportant un circuit principal de fluide frigorigène prélevant des calories d'une source froide pour les transférer vers une source chaude, la source froide comportant un échangeur thermique fluide frigorigène/vecteur de calories, dit évaporateur.

L'évaporateur, constitué habituellement par un échangeur thermique fluide frigorigène/air agencé dans l'habitacle, permet de refroidir l'air de cet habitacle. L'air prélevé dans l'habitacle permet de refroidir la batterie.

Comme pour la batterie, il convient de limiter la température du dispositif d'électronique de puissance.

Il est connu de refroidir le dispositif d'électronique de puissance à l'aide d'un circuit de liquide caloporteur (généralement un mélange d'eau et d'antigel) raccordé à un échangeur thermique liquide caloporteur/air, agencé dans la face avant du véhicule. À la sortie de l'échangeur thermique, la température du liquide caloporteur est abaissée généralement jusqu'à environ 60 °C. Toutefois, le volume et le coût du dispositif d'électronique de puissance pourraient être réduits en abaissant davantage la température du liquide caloporteur destiné à refroidir ce dispositif.

L'invention a notamment pour but d'optimiser, d'une part, le fonctionnement et la durée de vie de la batterie et, d'autre part, l'encombrement et le coût du dispositif d'électronique de puissance, ceci en modifiant le moins possible la configuration du compartiment moteur et des moyens de climatisation de l'habitacle du véhicule.

A cet effet, l'invention a pour objet un dispositif de régulation thermique pour véhicule automobile, du type précité, caractérisé en ce que l'évaporateur est un échangeur thermique fluide frigorigène/liquide caloporteur couplant thermiquement le circuit principal de fluide frigorigène à un circuit secondaire de liquide caloporteur pouvant être raccordé :
- à des premier et second échangeurs thermiques secondaires en échange thermique avec, respectivement, des première et seconde sources de calories du véhicule, et
- à un échangeur thermique liquide caloporteur/air,
les premier et second échangeurs secondaires ainsi que l'échangeur thermique liquide caloporteur/air étant agencés en parallèle dans le circuit secondaire.

Suivant des caractéristiques de différents modes de réalisation de ce dispositif :
- le circuit secondaire de liquide caloporteur comprend une vanne munie d'une première voie raccordée à une sortie de l'évaporateur, d'une deuxième voie raccordée à une entrée du premier échangeur secondaire et d'une troisième voie raccordée à une entrée du second échangeur secondaire ;
- le circuit secondaire de liquide caloporteur comprend une vanne munie d'une première voie raccordée à une entrée du premier échangeur secondaire, d'une deuxième voie raccordée à une entrée du second échangeur secondaire et d'une troisième voie raccordée à une entrée de l'échangeur thermique liquide caloporteur/air ;
- le circuit secondaire de liquide caloporteur est muni d'une pompe d'entraînement de ce liquide caloporteur ;
- la source chaude comporte un échangeur thermique fluide frigorigène/air, dit condenseur, agencé dans un compartiment moteur du véhicule ;
- l'échangeur thermique liquide caloporteur/air est agencé dans un habitacle du véhicule ;
- chaque échangeur thermique secondaire est agencé dans une partie du véhicule distincte de l'habitacle ;
- l'évaporateur est agencé dans une partie du véhicule distincte de l'habitacle ;
- chaque source de calories est choisie parmi un organe exothermique du véhicule, tel qu'un organe formant dispositif d'électronique de puissance ou batterie d'alimentation d'un moteur électrique d'entraînement du véhicule, et de l'air de suralimentation d'un moteur thermique du véhicule;
- le liquide caloporteur du circuit secondaire est un mélange d'eau et d'antigel.

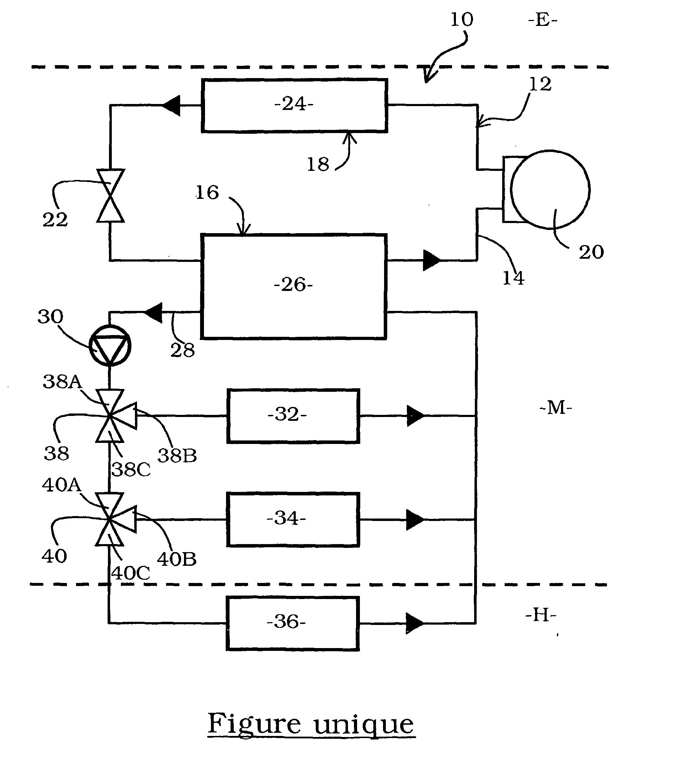

L'invention sera mieux comprise à la lecture de la description qui va suivre, donnée uniquement à titre d'exemple et faite en se référant aux dessins dans lesquels la figure unique est une vue schématique d'un dispositif de régulation thermique selon l'invention.

On a représenté sur la figure unique un dispositif de régulation thermique pour véhicule automobile, notamment de type électrique ou hybride, selon l'invention. Ce dispositif de régulation thermique est désigné par la référence générale 10.

Dans ce qui suit, deux organes sont dits couplés thermiquement entre eux lorsqu'ils échangent de la chaleur entre eux au moyen d'un échangeur thermique approprié.

Le dispositif de régulation thermique 10 comprend une pompe à chaleur 12 comportant un circuit principal 14 de fluide frigorigène, de type à compression, prélevant des calories d'une source froide 16 pour les transférer au moins partiellement vers une source chaude 18.

Les sources froide 16 et chaude 18 sont raccordées entre elles par un compresseur 20 (électrique ou mécanique) et une vanne de détente 22. Le fluide frigorigène se vaporise en enlevant de la chaleur à la source froide 16. Le compresseur 20 aspire le fluide vaporisé et le refoule vers la source chaude 18 où il se condense en refroidissant. La vanne de détente 22 laisse passer le fluide frigorigène liquide vers la source froide 16 en abaissant sa pression. Le sens de circulation du fluide frigorigène dans le circuit principal 14 est indiqué par des flèches sur la figure unique. Le fluide frigorigène circulant dans le circuit principal 14 est d'un type classique. Ce fluide frigorigène est choisi par exemple parmi un dérivé chloré et fluoré du méthane ou de l'éthane (Fréon), un hydrocarbure, l'ammoniaque, le dioxyde de carbone, etc.

La source chaude 18 comprend par exemple un échangeur thermique 24 fluide frigorigène/air, dit condenseur.

Le compresseur 20, la vanne de détente 22 et le condenseur 24 sont agencés dans un compartiment M du véhicule formant, de préférence, un compartiment moteur de ce véhicule. Le condenseur 24 est agencé, par exemple, dans une face avant du véhicule, à proximité de l'extérieur E du véhicule.

La source froide 16 comporte un échangeur thermique 26 fluide frigorigène/liquide caloporteur, dit évaporateur.

L'évaporateur 26 couple thermiquement le circuit principal 14 de fluide frigorigène à un circuit secondaire 28 de liquide caloporteur. Ce circuit 28 comporte une pompe 30, de préférence électrique, de mise en circulation du liquide caloporteur, raccordée, dans l'exemple illustré, à une sortie de l'échangeur thermique 26. En variante, la pompe 30 pourrait être agencée en amont de l'échangeur thermique 26.

Le liquide caloporteur du circuit secondaire 28 est, par exemple, un mélange d'eau et d'antigel.

Le sens de circulation du liquide caloporteur dans le circuit secondaire 28 est indiqué par des flèches sur la figure unique.

Le circuit secondaire 28 peut être raccordé, d'une part, à un premier échangeur thermique secondaire 32 en échange thermique avec un premier organe exothermique du véhicule et, d'autre part, à un second échangeur thermique secondaire 34 en échange thermique avec un second organe exothermique du véhicule.

Dans l'exemple décrit, le premier organe exothermique, en échange thermique avec l'échangeur 32, est formé par un dispositif d'électronique de puissance destiné à commander un moteur électrique d'entraînement du véhicule. Par ailleurs, le second organe exothermique, en échange thermique avec l'échangeur 34, est formé par une batterie d'alimentation du moteur électrique du véhicule.

On notera que, selon l'invention, les organes exothermiques en échange thermique avec les échangeurs 32, 34 peuvent être quelconques.

Le circuit secondaire 28 peut être raccordé également à un échangeur thermique 36 liquide caloporteur/air agencé dans un compartiment du véhicule formant un habitacle H de ce véhicule. L'échangeur thermique 36 liquide caloporteur/air est destiné à refroidir l'air de l'habitacle.

L'évaporateur 26 et les deux échangeurs thermiques secondaires 32, 34 peuvent être agencés dans divers compartiments du véhicule. Toutefois, on notera que, dans l'exemple décrit, l'évaporateur 26 et les deux échangeurs thermiques secondaires 32, 34 sont agencés dans un compartiment du véhicule distinct de l'habitacle. Ce compartiment peut être formé, par exemple, par le compartiment moteur ou bien par un compartiment disposé sous un plancher de l'habitacle du véhicule.

L'agencement dans le compartiment moteur de la pompe à chaleur 12 et des deux échangeurs thermiques secondaires 32, 34 facilite l'intégration du dispositif de régulation thermique 10 selon l'invention dans un véhicule classique en évitant de modifier notablement la configuration des moyens de climatisation de l'habitacle du véhicule existant déjà.

On notera que les premier 32 et second 34 échangeurs secondaires ainsi que l'échangeur thermique 36 liquide caloporteur/air sont agencés en parallèle dans le circuit secondaire 28.

Le circuit secondaire 28 de liquide caloporteur comprend une première vanne 38 munie d'une première voie 38A raccordée à la sortie de l'évaporateur 26, par l'intermédiaire de la pompe 30, d'une deuxième voie 38B raccordée à une entrée du premier échangeur secondaire 32 et d'une troisième voie 38C raccordée à une entrée du second échangeur secondaire 34.

Le circuit secondaire 28 de liquide caloporteur comprend également une seconde vanne 40 munie d'une première voie 40A raccordée à l'entrée du premier échangeur secondaire 32, par l'intermédiaire de la vanne 38, d'une deuxième voie 40B raccordée à l'entrée du second échangeur secondaire 34 et d'une troisième voie 40C raccordée à une entrée de l'échangeur thermique 36 liquide caloporteur/air.

On décrira ci-dessous les principaux aspects du fonctionnement du dispositif de régulation thermique 10 selon l'invention.

### a) fonctionnement du dispositif de régulation thermique 10 en saison froide

Lors du démarrage du véhicule, les organes exothermiques en échange thermique avec les échangeurs 32, 34 n'ont pas besoin d'être refroidis car leur température est suffisamment basse. De même, l'habitacle du véhicule n'a pas besoin d'être refroidi.

De ce fait, la pompe à chaleur 12 et la pompe 30 du circuit secondaire 28 de liquide caloporteur sont désactivées.

Si la motorisation électrique est sollicité lors du démarrage, la pompe 30 du circuit secondaire 28 est activée et les vannes 38,40 sont réglées de façon à permettre l'échange thermique entre le dispositif d'électronique de puissance et le liquide caloporteur, par l'intermédiaire du premier échangeur secondaire 32. Les calories prélevées dans le dispositif d'électronique de puissance sont dissipées dans l'habitacle H par l'intermédiaire de l'échangeur thermique 36 liquide caloporteur/air.

On notera qu'au moment du démarrage en saison froide il n'est généralement pas nécessaire de refroidir la batterie.

Après le démarrage, si la motorisation électrique est toujours sollicitée, le dispositif d'électronique de puissance et la batterie peuvent être refroidis selon les deux possibilités suivantes.

Une première possibilité consiste à désactiver la pompe à chaleur 12 et à activer la pompe 30 du circuit secondaire 28. Les vannes 38,40 sont réglées, selon les besoins, de façon à permettre la circulation de liquide caloporteur dans les échangeurs secondaires 32,34 et l'échangeur 36 liquide caloporteur/air. Ce dernier permet la dissipation dans l'habitacle des calories provenant des organes exothermiques en échange thermique avec les échangeurs secondaires 32,34. Dans ce cas, il est généralement prévu un ventilateur de formation d'un flux d'air à travers l'échangeur thermique 36.

La seconde possibilité consiste à activer la pompe à chaleur 12 et la pompe 30 du circuit secondaire 28. Les vannes 38,40 sont réglées, selon les besoins, de façon à permettre la circulation de liquide caloporteur dans les échangeurs secondaires 32,34. L'échangeur 36 liquide caloporteur/air est, de préférence, isolé du circuit secondaire 28. La pompe à chaleur 12 permet de dissiper vers l'extérieur du véhicule les calories provenant des organes exothermiques en échange thermique avec les échangeurs secondaires 32,34.

### b) fonctionnement du dispositif de régulation thermique 10 en saison chaude

Dans ce cas, la pompe à chaleur 12 est généralement activée. La pompe 30 du circuit secondaire 28 est également activée. Les vannes 38,40 sont réglées, selon les besoins, de façon à permettre la circulation du liquide caloporteur dans les échangeurs secondaires 32,34. On notera que, en saison chaude, il est généralement nécessaire de refroidir la batterie même lorsque que la motorisation électrique n'est pas sollicitée, de façon à maintenir la température de la batterie en dessous du seuil au-delà duquel son fonctionnement n'est plus possible.

La pompe à chaleur 12 permet de refroidir l'air de l'habitacle H par l'intermédiaire du circuit secondaire 28 de liquide caloporteur et de l'échangeur thermique 36 liquide caloporteur/air.

Parmi les avantages de l'invention, on notera que le circuit secondaire 28 de liquide caloporteur, couplé à la pompe à chaleur 12 par l'échangeur 26, permet de refroidir efficacement la batterie et le dispositif d'électronique de puissance d'un véhicule électrique ou hybride. De ce fait, la température maximale de la batterie peut être limitée à 45°C, ce qui permet d'accroître la durée de vie de cette batterie notamment d'un tiers de la durée de vie habituelle. Par ailleurs, la température du liquide caloporteur en échange thermique avec le dispositif d'électronique de puissance peut être abaissée d'environ 40°C par rapport à un dispositif de régulation thermique classique, ce qui permet de réduire le volume de ce dispositif d'électronique de puissance d'environ 1 litre.

En saison chaude, le circuit secondaire 28 de liquide caloporteur, couplé thermiquement à la source froide 16 de la pompe à chaleur, permet de réduire rapidement la température de la batterie de façon à la stabiliser à la valeur d'environ 45° garantissant une durée de vie relativement longue des batteries.

L'invention permet donc de faciliter l'utilisation de véhicules électriques ou hybrides dans des régions chaudes.

Enfin, l'invention peut être adaptée aux véhicules existants sans modifier notablement la configuration du compartiment moteur et des moyens de climatisation de l'habitacle de ces véhicules.

L'invention ne se limite pas au mode de réalisation décrit précédemment. En particulier, chaque échangeur thermique secondaire peut être en échange thermique avec une source de calories quelconque du véhicule autre qu'un organe exothermique, par exemple de l'air de suralimentation d'un moteur thermique du véhicule.

Dans ce cas, le moteur est généralement suralimenté au moyen d'un ensemble turbo-compresseur muni, d'une part, d'une turbine entraînée par des gaz d'échappement du moteur, agencée en aval du moteur, et d'autre part, d'un compresseur d'air d'admission agencé en amont du moteur. L'air d'admission du moteur, se réchauffant dans le compresseur, peut être refroidi à la sortie de ce compresseur, grâce à un échangeur secondaire du dispositif selon l'invention afin d'optimiser les performances du moteur et minimiser les émissions de polluants.

Par ailleurs, les deux vannes trois voies 38 et 40 du circuit secondaire 28 de liquide caloporteur peuvent être remplacées par trois vannes deux voies agencées respectivement dans les trois branches parallèles du circuit secondaire 28 auxquelles sont raccordés les premier 32 et second 34 échangeurs secondaires et l'échangeur 36 liquide caloporteur/air.

Le cas échéant, la vanne associée à la branche du circuit secondaire 28 à laquelle est raccordé l'échangeur 32 de régulation thermique du dispositif d'électronique de puissance peut être supprimée. La circulation continue du liquide caloporteur dans l'échangeur 32 de refroidissement de l'électronique de puissance est efficace même en cas de panne.

## Revendications

1. Dispositif de régulation thermique pour véhicule automobile, comprenant une pompe à chaleur (12) comportant un circuit principal (14) de fluide frigorigène prélevant des calories d'une source froide (16) pour les transférer vers une source chaude (18), la source froide (16) comportant un échangeur thermique (26) fluide frigorigène/vecteur de calories, dit évaporateur, ledit évaporateur (26) étant un échangeur thermique fluide frigorigène/liquide caloporteur couplant thermiquement le circuit principal (14) de fluide frigorigène à un circuit secondaire (28) de liquide caloporteur, ledit évaporateur étant raccordé :
- à des premier (32) et second (34) échangeurs thermiques secondaires en échange thermique avec, respectivement, des première et seconde sources de calories du véhicule, et
- à un échangeur thermique (36) liquide caloporteur/air,
les premier (32) et second (34) échangeurs secondaires ainsi que l'échangeur thermique (36) liquide caloporteur/air étant agencés en parallèle dans le circuit secondaire.

2. Dispositif selon la revendication 1, **caractérisé en ce que** le circuit secondaire (28) de liquide caloporteur comprend une vanne (38) munie d'une première voie (38A) raccordée à une sortie de l'évaporateur (26), d'une deuxième voie (38B) raccordée à une entrée du premier échangeur secondaire (32) et d'une troisième voie (38C) raccordée à une entrée du second échangeur secondaire (34).

3. Dispositif selon la revendication 1 ou 2, **caractérisé en ce que** le circuit secondaire (28) de liquide caloporteur comprend une vanne (40) munie d'une première voie (40A) raccordée à une entrée du premier échangeur secondaire (32), d'une deuxième voie (40B) raccordée à une entrée du second échangeur secondaire (34) et d'une troisième voie (40C) raccordée à une entrée de l'échangeur thermique (36) liquide caloporteur/air.

4. Dispositif selon l'une quelconque des revendications précédentes, **caractérisé en ce que** le circuit secondaire (28) de liquide caloporteur est muni d'une pompe (30) d'entraînement de ce liquide caloporteur.

5. Dispositif selon l'une quelconque des revendications précédentes, **caractérisé en ce que** la source chaude (18) comporte un échangeur thermique (24) fluide frigorigène/air, dit condenseur, agencé dans un compartiment moteur (M) du véhicule.

6. Dispositif selon l'une quelconque des revendications précédentes, **caractérisé en ce que** l'échangeur thermique (36) liquide caloporteur/air est agencé dans un habitacle (H) du véhicule.

7. Dispositif selon la revendication 6, **caractérisé en ce que** chaque échangeur thermique secondaire (32, 34) est agencé dans une partie (M) du véhicule distincte de l'habitacle.

8. Dispositif selon la revendication 6 ou 7, **caractérisé en ce que** l'évaporateur (26) est agencé dans une partie (M) du véhicule distincte de l'habitacle.

9. Dispositif selon l'une quelconque des revendications précédentes, **caractérisé en ce que** chaque source de calories est choisie parmi un organe exothermique du véhicule, tel qu'un organe formant dispositif d'électronique de puissance ou batterie d'alimentation d'un moteur électrique d'entraînement du véhicule, et de l'air de suralimentation d'un moteur thermique du véhicule.

10. Dispositif selon l'une quelconque des revendications précédentes, **caractérisé en ce que** le liquide caloporteur du circuit secondaire (28) est un mélange d'eau et d'antigel.

## Claims

1. A heat control device for a motor vehicle, comprising a heat pump (12) including a main circuit (14) for a refrigerant fluid absorbing calories from a cold source (16) in order to transfer them towards a hot source (18), the cold source (16) including a refrigerant fluid/calorie vector heat exchanger (26), a so-called evaporator, said evaporator (26) being a refrigerant fluid/coolant liquid heat exchanger thermally coupling the main circuit (14) of refrigerant fluid with a secondary circuit (28) of coolant liquid, said evaporator being connected:
- to first (32) and second (34) secondary heat exchangers in thermal exchange with the first and second sources of calories of the vehicle, respectively, and
- to a coolant liquid/air heat exchanger (36),
the first (32) and second (34) secondary exchangers as well as the coolant liquid/air heat exchanger (36) being arranged in parallel in the secondary circuit.

2. The device according to claim 1, **characterized in that** the secondary circuit (28) of coolant liquid comprises a valve (38) provided with a first route (38A) connected to an outlet of the evaporator (26), with a second route (38B) connected to an inlet of the first secondary exchanger (32) and with a third route (38C) connected to an inlet of the secondary exchanger (34).

3. The device according to claim 1 or 2, **characterized in that** the secondary circuit (28) of coolant liquid comprises a valve (40) provided with a first route (40A) connected to an inlet of the first secondary exchanger (32), with a second route (40B) connected to an inlet of the secondary exchanger (34) and with a third route (40C) connected to an inlet of the coolant liquid/air heat exchanger (36).

4. The device according to any of the preceding claims, **characterized in that** the secondary circuit (28) of coolant liquid is provided with a pump (30) for driving this coolant liquid.

5. The device according to any of the preceding claims, **characterized in that** the hot source (18) includes a refrigerant fluid/air heat exchanger (24), a so-called condenser, arranged in an engine compartment (M) of the vehicle.

6. The device according to any of the preceding claims, **characterized in that** the coolant liquid/air heat exchanger (36) is arranged in a passenger compartment (H) of the vehicle.

7. The device according to claim 6, **characterized in that** each secondary heat exchanger (32, 34) is arranged in a portion (M) of the vehicle, distinct from the passenger compartment.

8. The device according to claim 6 or 7, **characterized in that** the evaporator (26) is arranged in a portion (M) of the vehicle distinct from the passenger compartment.

9. The device according to any of the preceding claims, **characterized in that** each source of calories is selected from an exothermic unit of the vehicle, such as a unit forming a electronic power device or a battery for powering an electric drive motor of the vehicle, and air from supercharging of a heat engine of the vehicle.

10. The device according to any of the preceding claims, **characterized in that** the coolant liquid of the secondary circuit (28) is a mixture of water and antifreeze.

## Patentansprüche

1. Vorrichtung zur thermischen Regelung für Kraftfahrzeuge, eine Wärmepumpe (12) umfassend, einen Kältemittel-Hauptkreislauf (14) aufweisend, der einer kalten Quelle (16) Wärme entnimmt, um sie an eine warme Quelle (18) zu übertragen, wobei die kalte Quelle (16) einen Wärmetauscher (26) Kältemittel/Wärmeträger, Verdampfer genannt, aufweist, wobei der besagte Verdampfer (26) ein Wärmetauscher Kältemittel/Wärmeträgerflüssigkeit ist, der den Kältemittel-Hauptkreislauf (14) thermisch an einen sekundären Wärmeträgerflüssigkeits-Kreislauf (28) koppelt, wobei der besagte Verdampfer angeschlossen ist an:
- einen ersten (32) und einen zweiten (34) sekundären Wärmetauscher in thermischem Austausch mit jeweils einer ersten und einer zweiten Wärmequelle des Fahrzeugs, und
- einem Wärmetauscher (36) Wärmeträgerflüssigkeit/Luft,
wobei der erste (32) und zweite (34) sekundäre Wärmetauscher sowie der Wärmetauscher (36) Wärmeträgerflüssigkeit/Luft im sekundären Kreislauf parallel angeordnet sind.

2. Vorrichtung nach Anspruch 1, **dadurch gekennzeichnet, dass** der sekundäre Wärmeträgerflüssigkeits-Kreislauf (28) ein Ventil (38) umfasst, das mit einem ersten Weg (38A) ausgestattet ist, der an einen Verdampferausgang (26) angeschlossen ist, einem zweiten Weg (38B), der an einen Eingang des ersten sekundären Wärmetauschers (32) angeschlossen ist, und einem dritten Weg (38C), der an einen Eingang des zweiten sekundären Wärmetauschers (34) angeschlossen ist.

3. Vorrichtung nach Anspruch 1 oder 2, **dadurch gekennzeichnet, dass** der sekundäre Wärmeträgerflüssigkeits-Kreislauf (28) ein Ventil (40) umfasst, das mit einem ersten Weg (40A) ausgestattet ist, der an einen Eingang des ersten sekundären Wärmetauschers (32) angeschlossen ist, einem zweiten Weg (40B), der an einen Eingang des zweiten sekundären Wärmetauschers (34) angeschlossen ist, und einem dritten Weg (40C), der an einen Eingang des Wärmetauschers (36) Wärmeträgerflüssigkeit/Luft angeschlossen ist.

4. Vorrichtung nach einem der vorangehenden Ansprüche, **dadurch gekennzeichnet, dass** der sekundäre Wärmeträgerflüssigkeits-Kreislauf (28) mit einer Pumpe (30) zum Antrieb dieser Wärmeträgerflüssigkeit ausgestattet ist.

5. Vorrichtung nach einem der vorangehenden Ansprüche, **dadurch gekennzeichnet, dass** die warme Quelle (18) einen Wärmetauscher (24) Kältemittel/Luft, Kondensator genannt, umfasst, der in einem Motorraum (M) des Fahrzeugs angeordnet ist.

6. Vorrichtung nach einem der vorangehenden Ansprüche, **dadurch gekennzeichnet, dass** der Wärmetauscher (36) Wärmeträgerflüssigkeit/Luft in einer Fahrgastzelle (H) des Fahrzeugs angeordnet ist.

7. Vorrichtung nach Anspruch 6, **dadurch gekennzeichnet, dass** jeder sekundäre Wärmetauscher (32, 34) in einem Abschnitt (M) des Fahrzeugs, der sich von der Fahrgastzelle unterscheidet, angeordnet ist.

8. Vorrichtung nach Anspruch 6 oder 7, **dadurch gekennzeichnet, dass** der Verdampfer (26) in einem Abschnitt (M) des Fahrzeugs, der sich von der Fahrgastzelle unterscheidet, angeordnet ist.

9. Vorrichtung nach einem der vorangehenden Ansprüche, **dadurch gekennzeichnet, dass** jede Wärmequelle aus einem wärmegebenden Organ des Fahrzeugs ausgewählt ist wie einem Organ, das eine Leistungselektronik-Vorrichtung oder Versorgungsbatterie eines elektrischen Antriebsmotors des Fahrzeugs bildet, und aus der Ladeluft eines Verbrennungsmotors des Fahrzeugs.

10. Vorrichtung nach einem der vorangehenden Ansprüche, **dadurch gekennzeichnet, dass** die Wärmeträgerflüssigkeit des sekundären Kreislaufs (28) ein Gemisch von Wasser und Frostschutz ist.
